# EUROPEAN PATENT SPECIFICATION

(11) **EP 4 332 477 B1**
(45) Date of publication and mention of the grant of the patent: **01.04.2026**
(21) Application number: 22867515.3
(22) Date of filing: 23.06.2022
(51) Int. Cl.: F25D 23/06

(54) **REFRIGERATOR**
KÜHLSCHRANK
RÉFRIGÉRATEUR

(30) Priority: 10.09.2021 KR 20210121302; 27.01.2022 KR 20220012688
(43) Date of publication of application: 06.03.2024
(73) Proprietor: Samsung Electronics Co., Ltd., Suwon-si, Gyeonggi-do 16677 (KR)
(72) Inventor: LEE, Seungmin, Suwon-si Gyeonggi-do 16677 (KR); KANG, Jehun, Suwon-si Gyeonggi-do 16677 (KR); KIM, Joongho, Suwon-si Gyeonggi-do 16677 (KR); GO, Sungun, Suwon-si Gyeonggi-do 16677 (KR)
(74) Representative: Walaski, Jan Filip
(86) International application number: PCT/KR2022/008981
(87) International publication number: WO 2023/038246

(56) References cited:
- CN-U- 211 372 914
- JP-A- 2015 200 458
- KR-A- 20180 080 054
- KR-B1- 101 455 855
- KR-B1- 101 709 707
- KR-B1- 101 902 247
- US-A1- 2018 187 957
- US-A1- 2018 187 961
- US-B2- 10 808 989

## Description

### [Technical Field]

The invention relates to a refrigerator, and more particularly, to a refrigerator with an inner case formed by assembling a plurality of plates formed by injection-molding.

### [Background Art]

A refrigerator is a home appliance that includes a main body having a storage room, and a cool air supplier for supplying cool air to the storage room to keep foods fresh. The storage room includes a refrigerating room that is maintained at about 0 °C to 5 °C to keep foods refrigerated and a freezing room that is maintained at about 0 °C to 30 °C below zero to keep foods frozen. The front side of the storage room opens to put food in or take food out, and the open front side of the storage room is opened or closed by doors.

The main body of the refrigerator is formed by coupling an inner case with an outer case. The inner case forms the storage room, and the outer case forms the outer appearance of the refrigerator. An insulation is positioned between the inner case and the outer case to insulate the storage room.

US 2018/187957 A1 discloses a refrigerator having an assembly type inner case of which a sheet forming one side of the inner case is replaceable.

KR 101 902 247 B1 discloses a separation bar assembly which functions as a partition between upper and lower freezer compartments.

US 10 808 989 B2 discloses a refrigerator configured to have an increased storage compartment capacity.

Further relevant prior art is disclosed in document US2018/187961A.

### [Disclosure]

### [Technical Problem]

Therefore, it is an aspect of the invention to provide a refrigerator with an inner case formed by assembling a plurality of plates formed by injection-molding.

It is another aspect of the invention to provide a refrigerator capable of preventing or reducing a gap between a plurality of plates assembled to form an inner case.

It is another aspect of the invention to provide a refrigerator capable of improving airtightness between a plurality of plates assembled to form an inner case.

Additional aspects of the invention will be set forth in part in the description which follows and, in part, will be obvious from the description, or may be learned by practice of the invention.

### [Technical Solution]

According to the invention, a refrigerator is provided according to claim 1. Further embodiments of the present invention are set out in the dependent claims.

The accommodating portion may include: a first wall; a second wall being opposite to the first wall; and a third wall connecting the first wall to the second wall, and the inner rib formed to protrude from the third wall.

The first wall is formed to protrude from the second plate toward the insulation.

The inner rib is supported by the insertion protrusion along a fourth direction that is opposite to a third direction upon thermal contraction of the second plate along the third direction that is perpendicular to the first direction.

The inner rib is formed to extend along a longitudinal direction of the edge of the second plate.

The insertion protrusion may include: a first surface corresponding to the first wall; a second surface corresponding to the second wall; and a third surface corresponding to the third wall.

The insertion protrusion may include a catching hook formed to protrude from the second surface and configured to be caught by the catching portion.

The insertion protrusion may include a rib groove into which the inner rib is insertable, and the rib groove is formed by being depressed into the third surface.

The insertion protrusion may include a guide pin formed in the rib groove and configured to guide the insertion protrusion to be insertable into the accommodating groove, and the inner rib comprises a guide groove into which the guide pin is insertable.

The second coupling portion may include an outer rib connecting an outer surface of the second plate to an outer surface of the first wall and supporting the first wall.

The outer rib may include: a first contact surface being in contact with the outer surface of the second plate; a second contact surface being in contact with the outer surface of the first wall; and an inclined surface connecting the first contact surface to the second contact surface.

A plurality of outer ribs may be provided, and the plurality of outer ribs are spaced from each other along a longitudinal direction of the edge of the second plate.

The first wall is formed to extend from the second plate.

The first coupling portion may further include an auxiliary protrusion formed at an opposite side of the insertion protrusion, and the second coupling portion may further include a step portion stepped toward the insulation and being in contact with the auxiliary protrusion.

The second coupling portion may include an elastic bracket in which the catching portion is formed, and a plurality of slits respectively formed on both sides of the elastic bracket to enable the elastic bracket to be elastically deformable, the elastic bracket is, upon inserting of the insertion protrusion into the accommodating groove, pressed by the catching hook and elastically deformed, and the elastic bracket may return to an original state after the insertion protrusion is inserted in the accommodating groove.

### [Advantageous Effects]

According to a concept of the invention, an inner case of a refrigerator may be formed by assembling a plurality of plates formed by injection-molding.

According to a concept of the invention, it may be possible to prevent or reduce a gap between a plurality of plates assembled to form an inner case.

According to a concept of the invention, it may be possible to improve airtightness between a plurality of plates assembled to form an inner case.

According to a concept of the invention, it may be possible to prevent a reduction of an insulation thickness, dew formation, an increase of power consumption, etc., which are caused by coupling portions of a plurality of plates forming an inner case.

### [Brief Description of Drawings]

The above and other aspects, features, and advantages of certain embodiments of the present invention will become more apparent from the following description taken in conjunction with the accompanying drawings of which:
FIG. 1 shows an outer appearance of a refrigerator according to an embodiment; FIG. 2 is an exploded view of a first inner case, a second inner case, and an outer case of a refrigerator according to an embodiment;
FIG. 3 is an exploded view of a first inner case according to an embodiment;
FIG. 4 shows an upper plate and a right plate according to an embodiment;
FIG. 5 shows a first coupling portion of an upper plate and a second coupling portion of a right plate, according to an embodiment;
FIG. 6 is a cross-sectional view taken along line I-I of FIG. 5;
FIG. 7 is a cross-sectional view taken along line II-II of FIG. 5;
FIG. 8 is a cross-sectional view taken along line II-II of FIG. 5 and shown at another angle;
FIG. 9 is a cross-sectional view taken along line II-II of FIG. 5 and shown at another angle;
FIG. 10 is a cross-sectional view taken along line II-II of FIG. 5 and shown at another angle;
FIG. 11 shows a state in which an upper plate, a right plate, a left plate, and a lower plate, according to an embodiment, are coupled with each other, while a rear plate is separated from the other plates;
FIG. 12 shows an upper plate and a rear plate, according to an embodiment;
FIG. 13 is a cross-sectional view taken along line III-III of FIG. 12;
FIG. 14 is a cross-sectional view taken along line IV-IV of FIG. 12;
FIG. 15 is an exploded view of a second inner case according to an embodiment;
FIG. 16 shows an upper plate and a left plate, according to an embodiment;
FIG. 17 is a cross-sectional view taken along line V-V of FIG. 16;
FIG. 18 is a cross-sectional view taken along line VI-VI of FIG. 16;
FIG. 19 is a front cross-sectional view showing an inner case and an outer case of a refrigerator according to an embodiment;
FIG. 20 is an enlarged view showing a portion H of FIG. 19;
FIG. 21 is an enlarged view showing a portion I of FIG. 19;
FIG. 22 is a side cross-sectional view showing an inner case and an outer case of a lower portion of a refrigerator according to an embodiment; and
FIG. 23 is an enlarged view showing a portion J of FIG. 22.

### [Modes of the Invention]

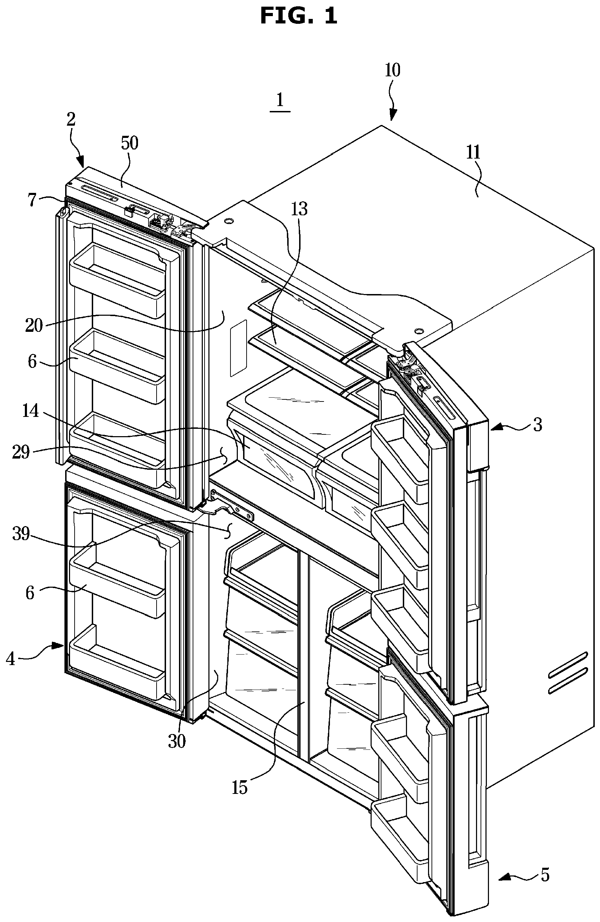

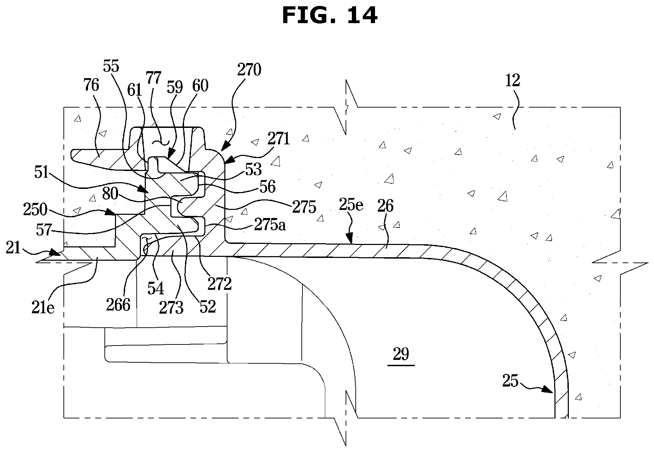

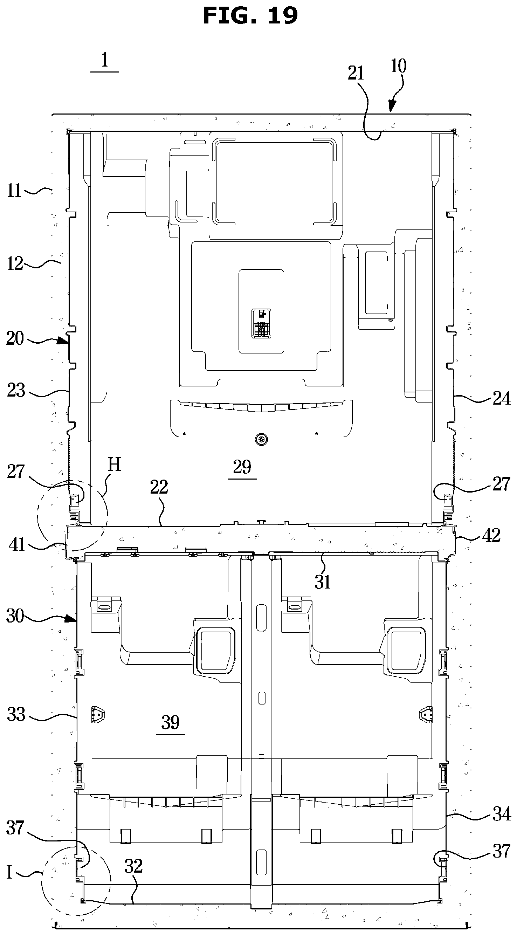

Figures 1-18 show embodiments according to the present invention, which disclose a refrigerator according to claim 1, whereas figures 19-23 show embodiments for understanding the present invention, but not being part of it. The embodiments described in the present specification are only the most preferred embodiments**.**

It is to be understood that the singular forms "a," "an," and "the" include plural referents unless the context clearly dictates otherwise. It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

it will be understood that, although the terms including ordinal numbers, such as "first", "second", etc., may be used herein to describe various components, these components should not be limited by these terms. These terms are only used to distinguish one component from another.

Hereinafter, the preferred embodiments of the disclosure will be described in detail with reference to the accompanying drawings.

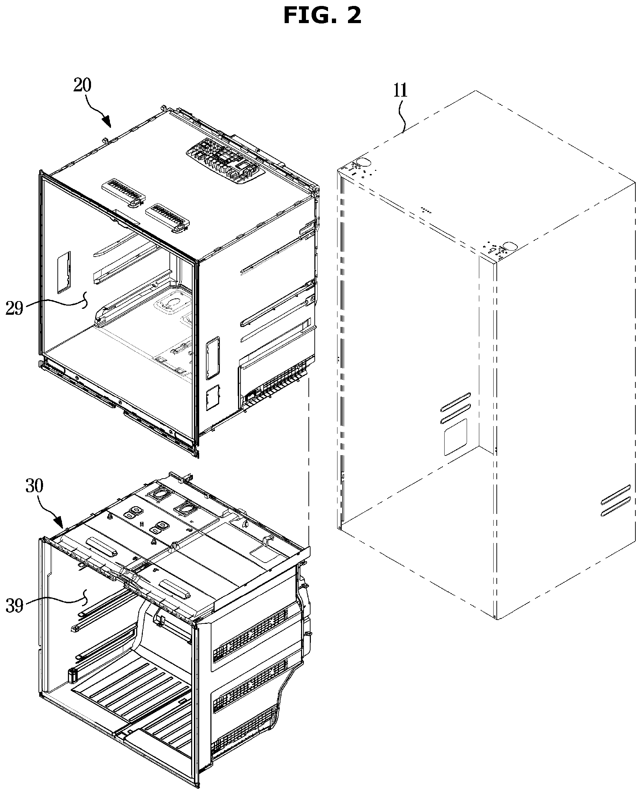

FIG. 1 shows an outer appearance of a refrigerator according to an embodiment of the disclosure. FIG. 2 is an exploded view of a first inner case, a second inner case, and an outer case of a refrigerator according to an embodiment of the disclosure.

Referring to FIGS. 1 and 2, a refrigerator 1 according to claim 1 may include a main body 10, a plurality of storage rooms 29 and 39 formed inside the main body 10, a plurality of doors 2, 3, 4, and 5 opening and closing the storage rooms 29 and 39, and a cool air supplier (not shown) for supplying cool air to the storage rooms 29 and 39.

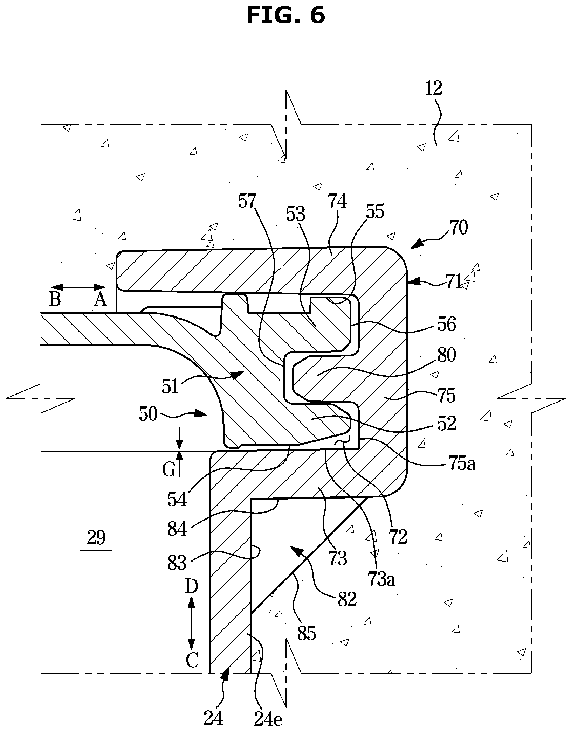

The main body 10 may include a plurality of inner cases 20 and 30 forming the storage rooms 29 and 39, an outer case 11 coupled with outer sides of the inner cases 20 and 30 and forming an outer appearance, and an insulation 12 (see FIG. 6) provided between the inner cases 20 and 30 and the outer case 11 to insulate the storage rooms 29 and 39.

The cool air supplier may generate cool air by using a cooling circulation cycle of compressing, condensing, expanding, and evaporating a refrigerant, and supply the generated cool air to the storage rooms 29 and 39.

The inner cases 20 and 30 may include a first inner case 20 and a second inner case 30. The first inner case 20 and the second inner case 30 may be manufactured as separate components and then coupled with each other. Each of the first inner case 20 and the second inner case 30 may be in a shape of a box of which a front side opens.

A first storage room 29 may be formed inside the first inner case 20, and a second storage room 39 may be formed inside the second inner case 30. The first storage room 29 may be used as a refrigerating room, and the second storage room 39 may be used as a freezing room. The second storage room 39 may be partitioned into a plurality of rooms by a vertical partition wall 15. The vertical partition wall 15 may be manufactured separately from the second inner case 30 and then coupled with the second inner case 30. However, the above-described partitioning and use purposes of the storage rooms 29 and 39 are an example, and the storage rooms 29 and 30 are not limited to the above-described example.

The first inner case 20 may be positioned in an upper portion of the main body 10, and the second inner case 30 may be positioned in a lower portion of the main body 10. However, the positions of the first inner case 20 and the second inner case 30 are not limited to the current embodiment of the disclosure, and the first inner case 20 and the second inner case 30 may be arranged in a left-right direction.

Inside the storage rooms 29 and 39, a shelf 13 on which foods are put and a storage container 14 for storing foods may be provided.

The first storage room 29 may be opened and closed by a pair of doors 2 and 3. The doors 2 and 3 may be rotatably coupled with the main body 10. The second storage room 39 may be opened and closed by the doors 4 and 5, and the doors 4 and 5 may be rotatably coupled with the main body 10. On rear surfaces of the doors 2, 3, 4, and 5, a door shelf 6 for storing foods may be provided. On edges of the rear surfaces of the doors 2, 3, 4, and 5, a gasket 7 may be provided to be in close contact with a front surface of the main body 10 and seal the storage rooms 29 and 39.

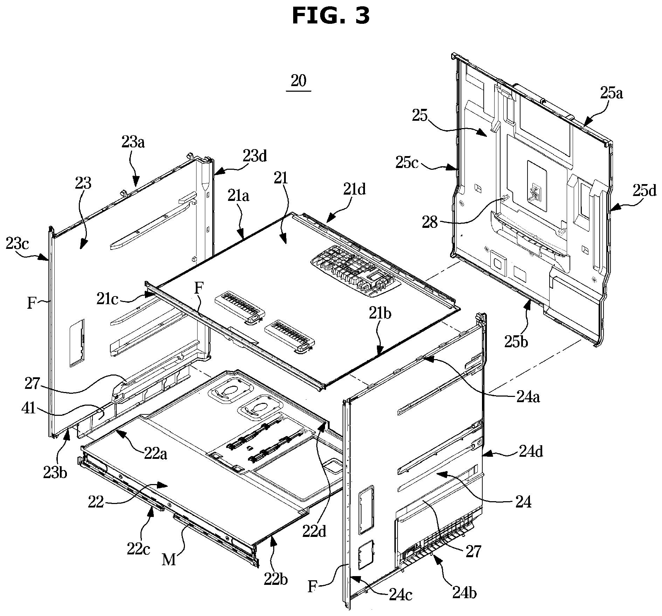

FIG. 3 is an exploded view of a first inner case according to an embodiment of the disclosure.

The first inner case 20 according to an embodiment of the disclosure will be described with reference to FIG. 3. Because the first inner case 20 and the second inner case 30 have no substantially great difference in structure, the following description about the first inner case 20 may be applied in the same way to the second inner case 30.

The first inner case 20 includes a plurality of plates 21, 22, 23, 24, and 25. The first inner case 20 is formed by coupling the plurality of plates 21, 22, 23, 24, and 25 with each other. The plurality of plates 21, 22, 23, 24, and 25 may be coupled with each other without using a separate coupling member. That is, the plurality of plates 21, 22, 23, 24, and 25 include coupling portions for mutual coupling, wherein the plurality of coupling portions are respectively integrated into the plates 21, 22, 23, 24, and 25.

The plurality of plates 21, 22, 23, 24, and 25 may be formed of a resin material and are formed by an injection molding method. Each of the plurality of plates 21, 22, 23, 24, and 25 may have four edges. The plurality of plates 21, 22, 23, 24, and 25 may include an upper plate 21, a lower plate 22, a left plate 23, a right plate 24, and a rear plate 25.

The upper plate 21 may form an upper surface of the storage room 29. The lower plate 22 may form a lower surface of the storage room 29. The left plate 23 may form a left surface of the storage room 29. The right plate 24 may form a right surface of the storage room 29. The rear plate 25 may form a rear surface of the storage room 29.

The upper plate 21, the lower plate 22, the left plate 23, the right plate 24, and the rear plate 25 are not limited to a flat shape without any curves, and the upper plate 21, the lower plate 22, the left plate 23, the right plate 24, and the rear plate 25 may include curves. The upper plate 21, the lower plate 22, the left plate 23, the right plate 24, and the rear plate 25 may have any shapes capable of forming the upper, lower, left, right, and rear surfaces of the storage room 29.

Also, unlike the current embodiment of the disclosure, at least two or more neighboring plates of the upper plate 21, the lower plate 22, the left plate 23, the right plate 24, and the rear plate 25 may be integrated into one body.

That is, unlike the current embodiment of the disclosure, the first inner case 20 may be configured with a smaller number of parts than five parts of the upper plate 21, the lower plate 22, the left plate 23, the right plate 24, and the rear plate 25.

For example, the upper plate 21 and the right plate 24 may be injection-molded into one body, and the lower plate 22 and the left plate 23 may be injection-molded into one body. Alternatively, the upper plate 21 and the left plate 23 may be injection-molded into one body, and the lower plate 22 and the right plate 24 may be injection-molded into one body.

As such, even in a case in which the first inner case 20 is configured with a smaller number of parts than five parts of the upper plate 21, the lower plate 22, the left plate 23, the right plate 24, and the rear plate 25, the following description will be applied in the same way.

A rail 27 slidably supporting the storage container 14 may be formed in each of the left plate 23 and the right plate 24. In the rear plate 25, a fixing portion 28 for fixing an evaporator may be formed.

The upper plate 21 may include a left edge 21a, a right edge 21b, a front edge 21c, and a rear edge 21d.

The lower plate 22 may include a left edge 22a, a right edge 22b, a front edge 22c, and a rear edge 22d.

The left plate 23 may include an upper edge 23a, a lower edge 23b, a front edge 23c, and a rear edge 23d.

The right plate 24 may include an upper edge 24a, a lower edge 24b, a front edge 24c, and a rear edge 24d.

The rear plate 25 may include an upper edge 25a, a lower edge 25b, a left edge 25c, and a right edge 25d.

The left edge 21a of the upper plate 21 may be coupled with the upper edge 23a of the left plate 23.

The right edge 21b of the upper plate 21 may be coupled with the upper edge 24a of the right plate 24.

The rear edge 21d of the upper plate 21 may be coupled with the upper edge 25a of the rear plate 25.

The left edge 22a of the lower plate 22 may be coupled with the lower edge 23b of the left plate 23.

The right edge 22b of the lower plate 22 may be coupled with the lower edge 24b of the right plate 24.

The rear edge 22d of the lower plate 22 may be coupled with the lower edge 25b of the rear plate 25.

The rear edge 23d of the left plate 23 may be coupled with the left edge 25c of the rear plate 25.

The rear edge 24d of the right plate 24 may be coupled with the right edge 25d of the rear plate 25.

As described above, the first inner case 20 may be formed by coupling the edges of the five plates 21, 22, 23, 24, and 25 with each other, and include eight coupling locations.

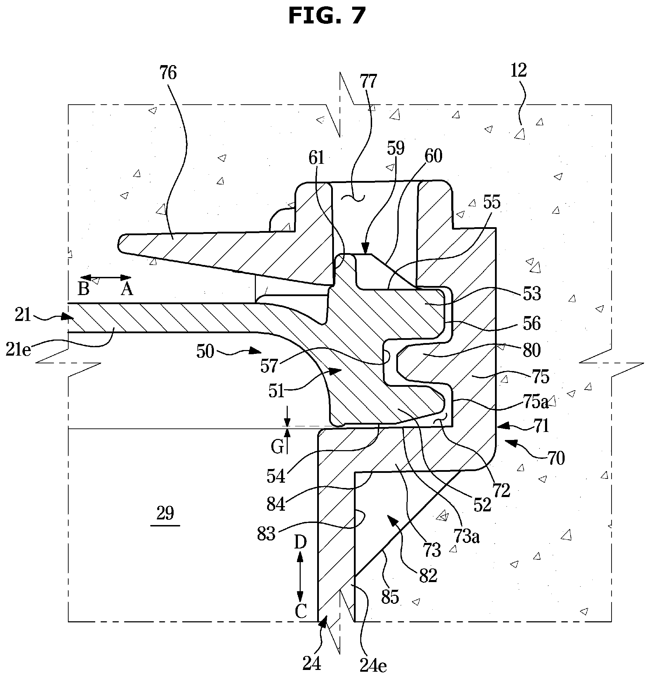

For coupling of the edges, coupling portions may be formed in the edges. In any ones of the plurality of edges to be coupled with each other, a plurality of first coupling portions 50, 250, 350, 450, 550, and 650 may be formed, and, in the other ones, a plurality of second coupling portions 70, 270, 370, 470, 570, and 670 may be formed (see FIGS. 7, 14, 18, 20, 21, and 23).

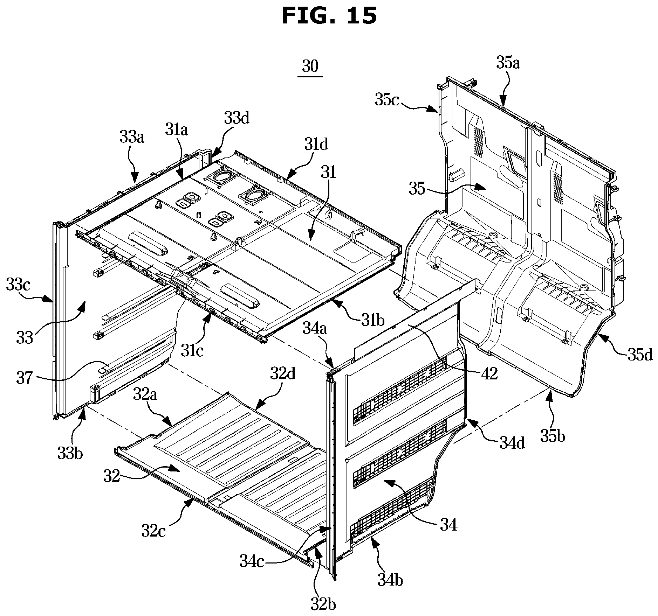

In the front edge 21c of the upper plate 21, the front edge 23c of the left plate 23, and the front edge 24c of the right plate 24, a front flange F forming the front surface of the first inner case 20 may be formed. In the front edge 22c of the lower plate 22, a middle connection plate M may be formed to be coupled with a front edge 31c (see FIG. 15) of an upper plate 31 of the second inner case 30.

An extension panel 41 may extend downward from the lower edge 23b of the left plate 23. The extension panel 41 may be coupled with a left plate 33 (see FIG. 15) of the second inner case 30. The extension panel 41 may prevent deformation of the inner cases 20 and 30 and the outer case 11, which is caused by a difference between a thickness of an insulation between the first inner case 20 and the outer case 11 and a thickness of an insulation between the second inner case 30 and the outer case 11.

Hereinafter, detailed structures of the first coupling portions and the second coupling portions will be described with reference to the drawings.

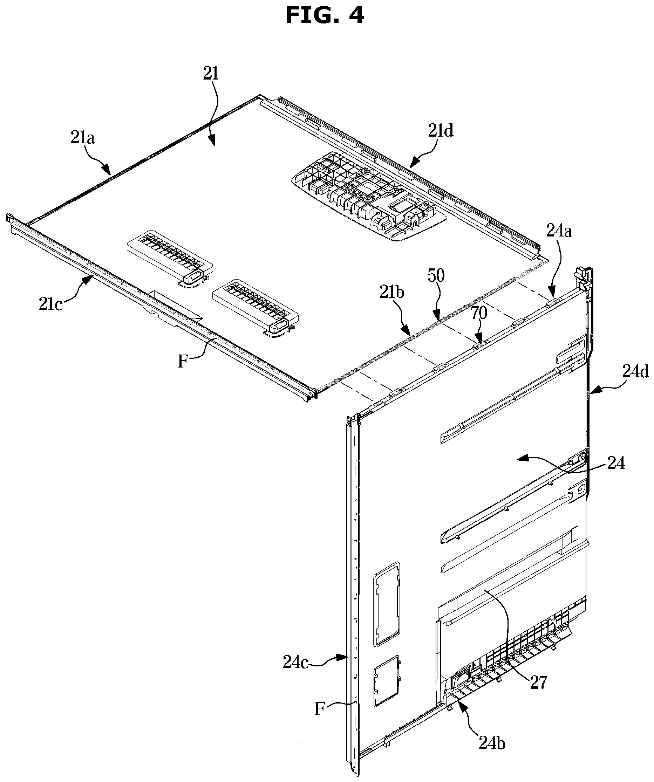

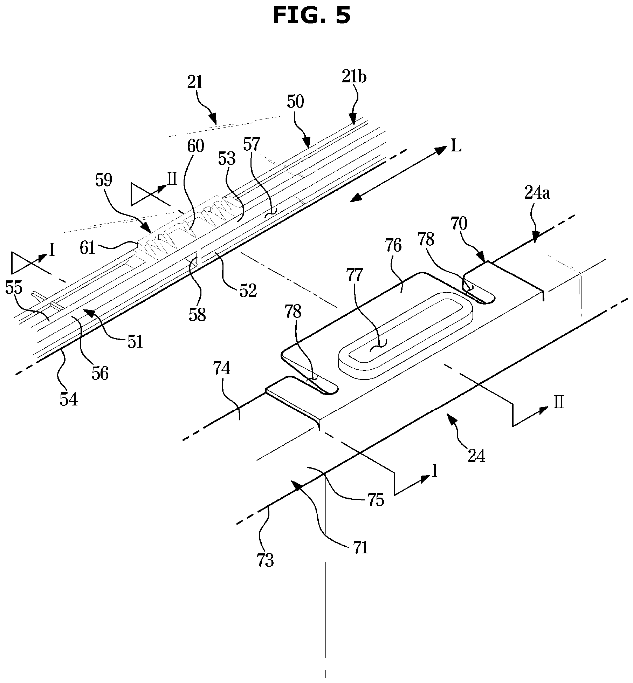

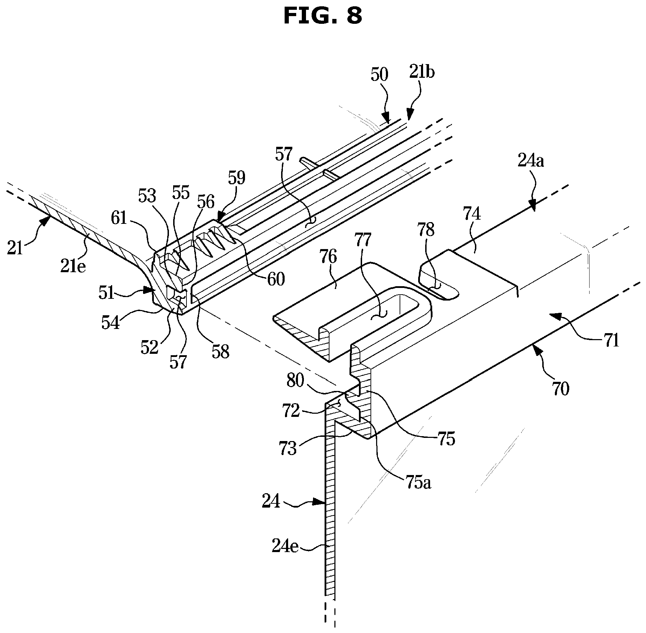

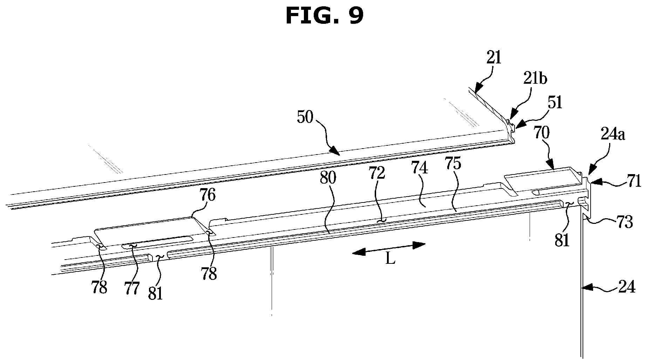

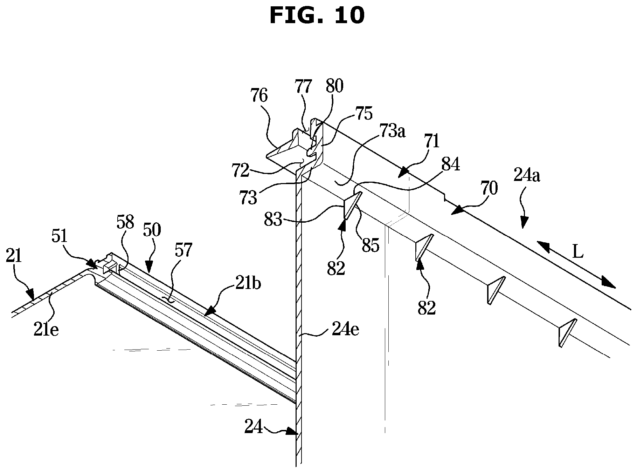

FIG. 4 shows an upper plate and a right plate according to an embodiment of the disclosure. FIG. 5 shows a first coupling portion of an upper plate and a second coupling portion of a right plate, according to an embodiment of the disclosure. FIG. 6 is a cross-sectional view taken along line I-I of FIG. 5. FIG. 7 is a cross-sectional view taken along line II-II of FIG. 5. FIG. 8 is a cross-sectional view taken along line II-II of FIG. 5 and shown at another angle. FIG. 9 is a cross-sectional view taken along line II-II of FIG. 5 and shown at another angle. FIG. 10 is a cross-sectional view taken along line II-II of FIG. 5 and shown at another angle.

A coupling structure of the right edge 21b of the upper plate 21 and the upper edge 24a of the right plate 24 will be described with reference to FIGS. 4 to 9.

After the upper plate 21 is coupled with the right plate 24, the upper plate 21 may be perpendicular to the right plate 24. After the upper plate 21 is coupled with the right plate 24, a longitudinal direction L of the right edge 21b of the upper plate 21 may be identical to a longitudinal direction L of the upper edge 24a of the right plate 24.

To couple the right edge 21b of the upper plate 21 with the upper edge 24a of the right plate 24, the first coupling portion 50 may be formed in the right edge 21b of the upper plate 21, and the second coupling portion 70 may be formed in the upper edge 24a of the right plate 24.

That is, the upper plate 21 may include an upper plate body 21e, and the first coupling portion 50 formed in the right edge 21b. The right plate 24 may include a right plate body 24e, and the second coupling portion 70 formed in the upper edge 24a.

However, contrary to the current embodiment of the disclosure, the second coupling portion 70 may be formed in the right edge 21b of the upper plate 21, and the first coupling portion 50 may be formed in the upper edge 24a of the right plate 24.

The first coupling portion 50 may be one of various embodiments of the first coupling portion in accordance with claim 1. The second coupling portion 70 may be one of various embodiments of the second coupling portion in accordance with claim 1. The structures of the first coupling portion 50 and the second coupling portion 70 may be applied in the same way to the edges of the other plates.

The first coupling portion 50 includes an insertion protrusion 51. The insertion protrusion 51 may protrude from the upper plate body 21e onto the same plane or on a plane being in parallel to the upper plate body 21e. The insertion protrusion 51 may extend along the longitudinal direction L of the edge 21b.

The second coupling portion 70 includes an accommodating portion 71 forming an accommodating groove 72 into which the insertion protrusion 51 is inserted. The accommodating groove 72 may extend along the longitudinal direction L of the upper edge 24a to correspond to the insertion protrusion 51.

The accommodating portion 71 may include a first wall 73, a second wall 74, and a third wall 75. The first wall 73, the second wall 74, and the third wall 75 may form the accommodating groove 72. The first wall 73 may be opposite to the second wall 74. The third wall 75 may connect the first wall 73 to the second wall 74.

The first wall 73 may protrude from the right plate body 24e toward the insulation 12. The first wall 73 may be formed perpendicular to the right plate body 24e.

The second coupling portion 70 includes a catching portion 77 for preventing the insertion protrusion 71 inserted in the accommodating groove 72 from departing from the accommodating groove 72. The insertion protrusion 51 is inserted into the accommodating groove 72 in a first direction A, and the catching portion 77 prevents the insertion protrusion 51 inserted in the accommodating groove 72 from departing from the accommodating groove 72 in particular in a second direction B which is the opposite direction of the first direction A.

Also, the catching portion 77 may prevent the insertion protrusion 51 inserted in the accommodating groove 72 from moving in the longitudinal direction L of the upper edge 24a.

The second coupling portion 70 may include an elastic bracket 76 in which the catching portion 77 is formed. The elastic bracket 76 may be formed by being bent from the third wall 75. A portion of the second wall 74 may be cut, and the elastic bracket 76 may be positioned at the cut portion of the second wall 74. A slit 78 may be formed to both sides of the elastic bracket 76 to enable the elastic bracket 76 to be smoothly deformed elastically. The slit 78 may be formed to both sides of the elastic bracket 76 in the longitudinal direction L of the upper edge 24a.

The elastic bracket 76 may be, in a process of inserting the insertion protrusion 51 into the accommodating groove 72, pressed by a catching hook 59 and elastically deformed to be open. After the insertion protrusion 51 is inserted in the accommodating groove 72, the elastic bracket 76 may return to an original state.

The insertion protrusion 51 may include the catching hook 59 that is caught by the catching portion 77. The catching portion 77 may be formed in a shape of a hole by which the catching hook 59 is caught. However, unlike the current embodiment of the disclosure, the catching portion 77 may be formed in a shape of a groove. Also, the catching portion 77 may be formed in a shape of a hook or another shape corresponding to the catching hook.

The insertion protrusion 51 may include a first surface 54 corresponding to the first wall 73, a second surface 55 corresponding to the second wall 74, and a third surface 56 corresponding to the third wall 75. After the insertion protrusion 51 is inserted into the accommodating groove 72, the first surface 54 may face an inner surface of the first wall 73, the second surface 55 may face an inner surface of the second wall 74, and the third surface 56 may face an inner surface of the third wall 75.

The catching hook 59 may protrude from the second surface 55. The catching hook 59 may include an inclined surface 60 inclined to slide on the elastic bracket 76 while being in contact with the elastic bracket 76 upon inserting of the insertion protrusion 51 into the accommodating groove 72, and a catching surface 61 caught by the catching portion 77 after the insertion protrusion 51 is inserted in the accommodating groove 72.

The second coupling portion 70 includes an inner rib 80 protruding from the accommodating portion 71, wherein the inner rib 80 is inserted into the insertion protrusion 51 upon inserting of the insertion protrusion 51 into the accommodating groove 72. The inner rib 80 may protrude from the inner surface 75a of the third wall 75 toward the accommodating groove 72. The inner rib 80 may be spaced from the inner surface 73a of the first wall 73 and the inner surface of the second wall 74.

The inner rib 80 protrudes in the second direction B which is an insertion direction of the insertion protrusion 51 and is the opposite direction of the first direction A. Accordingly, in a process of inserting the insertion protrusion 51 into the accommodating groove 72, the inner rib 80 may also be naturally inserted into the insertion protrusion 51.

As such, by providing the inner rib 80 in the accommodating portion 71, the inner case 20 may be prevented from being deformed upon thermal contraction of the inner case 20 by low temperature of the storage room 29, and a gap G between the first coupling portion 50 and the second coupling portion 70 may be prevented from opening.

Upon thermal contraction of the right plate 24 by low temperature, the right plate 24 may be thermally contracted in a third direction C. The third direction C may be perpendicular to the first direction A and the second direction B.

In this case, the inner rib 80 may be supported by the insertion protrusion 51 in a fourth direction D which is opposite to the third direction C. Also, the inner rib 80 may press the insertion protrusion 51 in the third direction C. Accordingly, contractional deformation of the right plate 24 may be prevented, and accordingly, a space G between the first surface 54 of the insertion protrusion 51 and the inner surface 73a of the first wall 73 may be prevented from opening.

The insertion protrusion 51 may include a rib groove 57 in which the inner rib 80 is inserted. The rib groove 57 may be formed by being depressed in the third surface 56 of the insertion protrusion 51. The insertion protrusion 51 may include a first portion 52 formed between the rib groove 57 and the first surface 54, and a second portion 53 formed between the rib groove 57 and the second surface 55.

After the insertion protrusion 51 is inserted in the accommodating groove 72, the first portion 52 may be positioned between the first wall 73 and the inner rib 80, and the second portion 53 may be positioned between the second wall 74 and the inner rib 80.

As described above, the inner rib 80 may prevent thermal deformation of the inner case 20, while preventing a gap between the coupling portions from opening. Furthermore, the inner rib 80 may improve airtightness between the coupling portions.

The inner rib 80 may extend along the longitudinal direction L of the upper edge 24a. The rib groove 57 may extend along the longitudinal direction L of the right edge 21b.

The insertion protrusion 51 may include a guide pin 58 formed in the rib groove 57 and guiding the insertion protrusion 51 to be inserted into the accommodating groove 72. The guide pin 58 may guide the inner rib 80 to be inserted into the rib groove 57. The guide pin 58 may connect the first portion 52 to the second portion 53.

The inner rib 80 may include a guide groove 81 in which the guide pin 58 is inserted. After the guide pin 58 is inserted in the guide groove 81, the guide pin 58 may be supported by the inner rib 80 at both sides. Accordingly, the first coupling portion 50 and the second coupling portion 70 may be further prevented from moving in the longitudinal direction L of the upper edge 24a and the right edge 21b.

A plurality of guide pins 58 may be provided, and the plurality of guide pins 58 may be spaced from each other along the longitudinal direction L of the right edge 21b.

The second coupling portion 70 may include an outer rib 82 provided on an outer side of the accommodating portion 71 and supporting the first wall 73. The outer rib 82 may connect an outer surface of the first wall 73 to the right plate body 24e. The outer rib 82 may be integrated into the right plate 24.

The outer rib 82 may be formed in a shape of a triangle. That is, the outer rib 82 may include a first contact surface 83 being in contact with an outer surface of the right plate body 24e, a second contact surface 84 being in contact with the outer surface of the first wall 73, and an inclined surface 85 connecting the first contact surface 83 to the second contact surface 84. A plurality of outer ribs 82 may be provided, and the plurality of outer ribs 82 may be spaced from each other along the longitudinal direction L of the upper edge 24a.

As such, by providing the outer rib 82, thermal deformation of the inner case 20 and gap opening between the coupling portions may be further prevented.

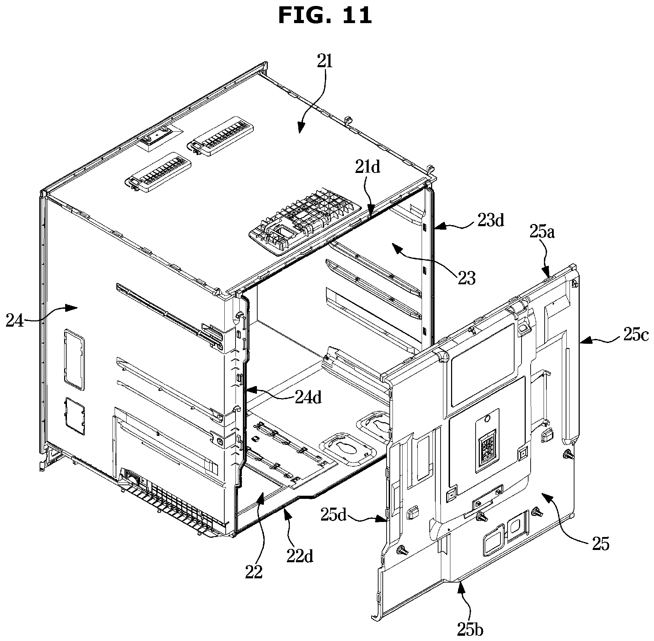

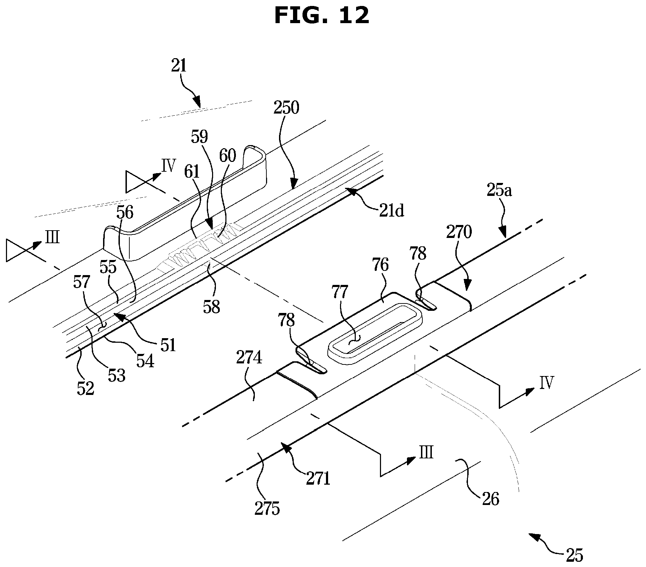

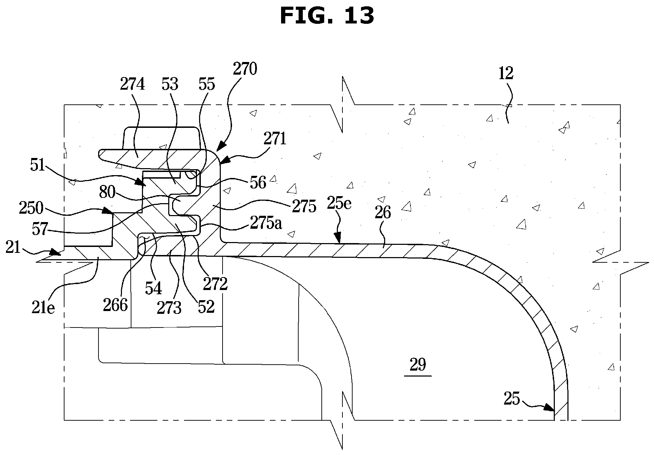

FIG. 11 shows a state in which an upper plate, a right plate, a left plate, and a lower plate, according to an embodiment of the disclosure, are coupled with each other, while a rear plate is separated from the other plates. FIG. 12 shows an upper plate and a rear plate, according to an embodiment of the disclosure. FIG. 13 is a cross-sectional view taken along line III-III of FIG. 12.

A coupling structure of the rear edge 21d of the upper plate 21 and the upper edge 25a of the rear plate 25 will be described with reference to FIGS. 11 to 14.

To couple the rear edge 21d of the upper plate 21 with the upper edge 25a of the rear plate 25, a first coupling portion 250 may be formed in the rear edge 21d of the upper plate 21, and a second coupling portion 270 may be formed in the upper edge 25a of the rear plat e 25.

That is, the upper plate 21 may include the upper plate body 21e, and the first coupling portion 250 formed in the rear edge 21d. The rear plate 25 may include the rear plate body 25e, and the second coupling portion 270 formed in the upper edge 25a.

However, contrary to the current embodiment of the disclosure, the second coupling portion 270 may be formed in the rear edge 21d of the upper plate 21, and the first coupling portion 250 may be formed in the upper edge 25a of the rear plate 25.

The first coupling portion 250 may be one of various embodiments of the first coupling portion in accordance with claim 1. The second coupling portion 270 may be one of various embodiments of the second coupling portion in accordance with claim 1. Structures of the first coupling portion 250 and the second coupling portion 270 may be applied in the same way to the edges of the other plates.

The structures of the first coupling portion 250 and the second coupling portion 270 may be the substantially same as those of the first coupling portion 50 and the second coupling portion 70 as described above, except for some differences. Therefore, in the following description, the same components as those of the first coupling portion 50 and the second coupling portion 70 will be assigned like reference numerals, and descriptions about the same components will be omitted.

The first coupling portion 250 includes the insertion protrusion 51. The insertion protrusion 51 may protrude from the upper plate body 21e onto a plane being in parallel to the upper plate body 21e. The insertion protrusion 51 may extend along the longitudinal direction L of the rear edge 21d.

An accommodating space 266 may be formed between the insertion protrusion 51 and the upper plate body 21e. A first wall 273 of the second coupling portion 270 may be accommodated in the accommodating space 266. Because the first wall 273 is accommodated in the accommodating space 266, the first wall 273 may be prevented from further protruding toward the storage room 29 than the upper plate body 21e.

The second coupling portion 270 includes an accommodating portion 271 forming an accommodating groove 272 in which the insertion protrusion 51 is inserted. The accommodating groove 272 may extend along the longitudinal direction L of the upper edge 25a to correspond to the insertion protrusion 51.

The accommodating portion 271 may include the first wall 273, a second wall 274, and a third wall 275. The first wall 273, the second wall 274, and the third wall 275 may form the accommodating groove 272. The first wall 273 may be opposite to the second wall 274. The third wall 275 may connect the first wall 273 to the second wall 274.

The first wall 273 may extend from the rear plate body 25e onto the same plane as the rear plate body 25e. That is, unlike the above-described first wall 73 protruding toward the insulation 12 from the right plate body 24e, the first wall 273 may be formed by the rear plate body 25e extending onto the same plane without being bent toward the insulation 12.

The third wall 275 may protrude from the rear plate body 25e toward the insulation 12 and connect the first wall 273 to the second wall 274.

Because the first wall 273 extends from the rear plate body 25e onto the same plane as the rear plate body 25e as described above, the rear plate 25 may include a bending portion 26 bent toward the upper plate 21.

The second coupling portion 270 includes a catching portion 77 for preventing the insertion protrusion 51 inserted in the accommodating groove 272 from departing from the accommodating groove 272.

The second coupling portion 270 may include an elastic bracket 76 in which the catching portion 77 is formed. The elastic bracket 76 may be formed by being bent from the third wall 275. A portion of the second wall 274 may be cut, and the elastic bracket 76 may be positioned in the cut portion of the second wall 274.

The elastic bracket 76 may be, in a process of inserting the insertion protrusion 51 into the accommodating groove 272, pressed by the catching hook 59 and elastically deformed to be open. After the insertion protrusion 51 is inserted in the accommodating groove 272, the elastic bracket 76 may return to an original state.

The insertion protrusion 51 may include a first surface 54 corresponding to the first wall 273, a second surface 55 corresponding to the second wall 274, and a third surface 56 corresponding to the third wall 275. After the insertion protrusion 51 is inserted in the accommodating groove 272, the first surface 54 may face an inner surface of the first wall 273, the second surface 55 may face an inner surface of the second wall 274, and the third surface 56 may face an inner surface 275a of the third wall 275.

The catching hook 59 may protrude from the second surface 55. The catching hook 59 may include an inclined surface 60 inclined to slide on the elastic bracket 76 while being in contact with the elastic bracket 76 upon inserting of the insertion protrusion 51 into the accommodating groove 272, and a catching surface 61 caught by the catching portion 77 after the insertion protrusion 51 is inserted in the accommodating groove 72.

The second coupling portion 270 includes an inner rib 80 protruding from the accommodating portion 271, wherein the inner rib 80 is inserted into the insertion protrusion 51 upon inserting of the insertion protrusion 51 into the accommodating groove 272. The inner rib 80 may protrude from the inner surface 275a of the third wall 275 toward the accommodating groove 272. The inner rib 80 may be spaced from the inner surface of the first wall 273 and the inner surface of the second wall 274.

The insertion protrusion 51 may include a rib groove 57 in which the inner rib 80 is inserted. The rib groove 57 may be formed by being depressed in the third surface 56 of the insertion protrusion 51.

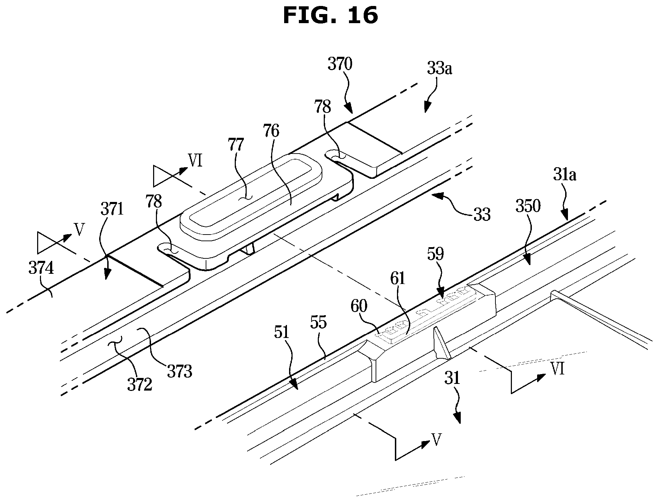

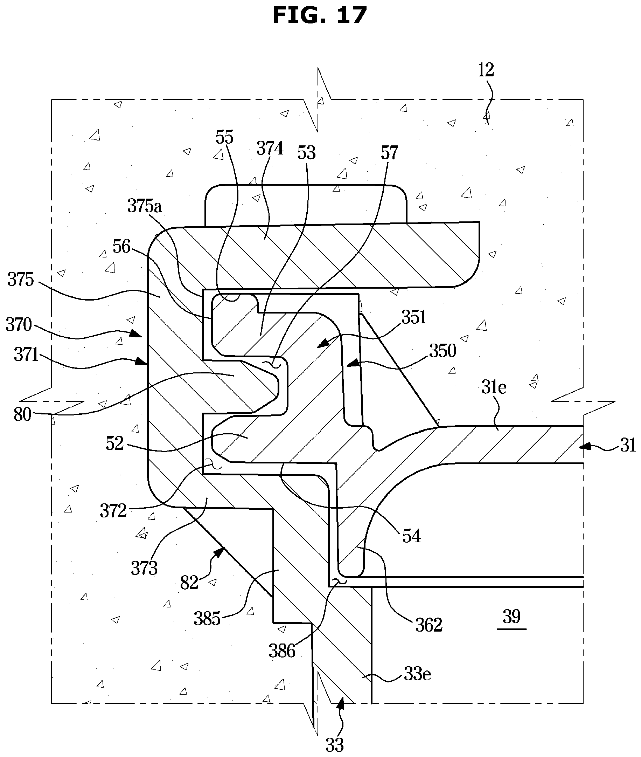

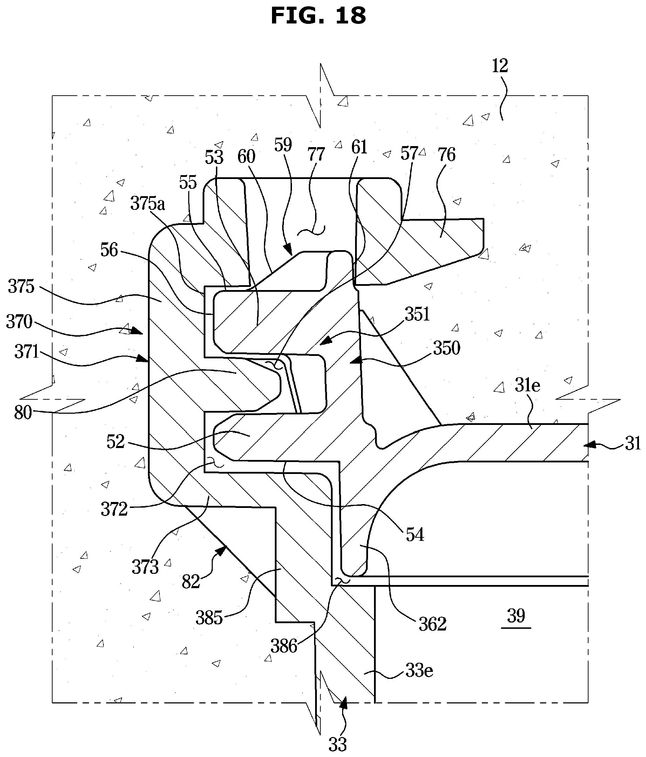

FIG. 15 is an exploded view of a second inner case according to an embodiment of the disclosure. FIG. 16 shows an upper plate and a left plate, according to an embodiment of the disclosure. FIG. 17 is a cross-sectional view taken along line V-V of FIG. 16. FIG. 18 is a cross-sectional view taken along line VI-VI of FIG. 16.

A structure of the second inner case 30 and a coupling structure of a left edge 31a of the upper plate 31 of the second inner case 30 and an upper edge 33a of the left plate 33 of the second inner case 30 will be described with reference to FIGS. 15 to 18.

The second inner case 30 may include a plurality of plates 31, 32, 33, 34, and 35. The second inner case 30 may be formed by coupling the plurality of plates 31, 32, 33, 34, and 35 with each other. The plurality of plates 31, 32, 33, 34, and 35 may be coupled with each other without using a separate coupling member. That is, the plurality of plates 31, 32, 33, 34, and 35 may include coupling portions for mutual coupling, wherein the plurality of coupling portions are respectively integrated into the plates 31, 32, 33, 34, and 35.

The plurality of plates 31, 32, 33, 34, and 35 may be formed of a resin material by an injection molding method. Each of the plurality of plates 31, 32, 33, 34, and 35 may have four edges. The plurality of plates 31, 32, 33, 34, and 35 may include an upper plate 31, a lower plate 32, a left plate 33, a right plate 34, and a rear plate 35.

The upper plate 31 may include the left edge 31a, a right edge 31b, a front edge 31c, and a rear edge 31d.

The lower plate 32 may include a left edge 32a, a right edge 32b, a front edge 32c, and a rear edge 32d.

The left plate 33 may include the upper edge 33a, a lower edge 33b, a front edge 33c, and a rear edge 33d.

The right plate 34 may include an upper edge 34a, a lower edge 34b, a front edge 34c, and a rear edge 34d.

The right plate 35 may include an upper edge 35a, a lower edge 35b, a left edge 35c, and a right edge 35d.

The left edge 31a of the upper plate 31 may be coupled with the upper edge 33a of the left plate 33.

The right edge 31b of the upper plate 31 may be coupled with the upper edge 34a of the right plate 34.

The rear edge 31d of the upper plate 31 may be coupled with the upper edge 35a of the rear plate 35.

The left edge 32a of the lower plate 32 may be coupled with the lower edge 33b of the left plate 33.

The right edge 32b of the lower plate 32 may be coupled with the lower edge 34b of the right plate 34.

The rear edge 32d of the lower plate 32 may be coupled with the lower edge 35b of the rear plate 34.

The rear edge 33d of the left plate 33 may be coupled with the left edge 35c of the rear plate 35.

The left edge 34d of the right plate 34 may be coupled with the right edge 35d of the rear plate 35.

As described above, the second inner case 30 may be formed by coupling the edges of the five plates 31, 32, 33, 34, and 35 with each other, and include eight coupling locations.

For coupling of the edges, the coupling portions may be formed in the edges. In any ones of the plurality of edges to be coupled with each other, a plurality of first coupling portions 50, 250, and 350 may be formed, and, in the other ones, a plurality of second coupling portions 70, 270 and 370 may be formed (see FIGS. 7, 14, and 18).

In the front edge 32c of the lower plate 32, the front edge 33c of the left plate 33, and the front edge 34c of the right plate 34, a front flange forming the front surface of the second inner case 30 may be formed. An extension panel 42 may extend upward from the upper edge 34a of the right plate 34. The extension panel 42 may be coupled with the right plate 24 of the first inner case 20.

To couple the left edge 31a of the upper plate 31 with the upper edge 33a of the left plate 33, the first coupling portion 350 may be formed in the left edge 31a of the upper plate 31, and the second coupling portion 370 may be formed in the upper edge 33a of the left plate 33.

That is, the upper plate 31 may include an upper plate body 31e, and the first coupling portion 350 formed in the left edge 31a. The left plate 33 may include a left plate body 33e, and the second coupling portion 370 formed in the upper edge 33a.

However, contrary to the current embodiment of the disclosure, the second coupling portion 370 may be formed in the left edge 31a of the upper plate 31, and the first coupling portion 350 may be formed in the upper edge 33a of the left plate 33.

The first coupling portion 350 may be one of various embodiments of the first coupling portion. The second coupling portion 370 may be one of various embodiments of the second coupling portion. The structures of the first coupling portion 350 and the second coupling portion 370 may be applied in the same way to the edges of the other plates.

The structures of the first coupling portion 350 and the second coupling portion 370 may be the substantially same as those of the first coupling portions 50 and 250 and the second coupling portions 70 and 270 as described above, except for some differences. Therefore, in the following description, the same components as those of the first coupling portions 50 and 250 and the second coupling portions 70 and 270 are assigned like reference numerals, and descriptions about the same components will be omitted.

The first coupling portion 350 includes an insertion protrusion 351. The insertion protrusion 351 may protrude from the upper plate body 31e onto the same plane as the upper plate body 31e or onto a plane being in parallel to the upper plate body 31e. The insertion protrusion 351 may extend along the longitudinal direction of the left edge 31a.

Unlike the above-described embodiments of the disclosure, the first coupling portion 350 may further include an auxiliary protrusion 362 formed at the opposite side of the insertion protrusion 351.

The second coupling portion 370 may include a step portion 385 stepped toward the insulation 12 and being in contact with the auxiliary protrusion 362. An accommodating space 386 may be formed between the step portion 385 and the left plate body 33e. The auxiliary protrusion 362 of the first coupling portion 370 may be accommodated in the accommodating space 386. Because the auxiliary protrusion 362 is accommodated in the accommodating space 386, the auxiliary protrusion 362 may be prevented from further protruding toward the storage room 39 than the left plate body 33e.

Due to the auxiliary protrusion 362 and the step portion 385, thermal deformation of the inner case 30 may be further reduced and airtightness between the first coupling portion 350 and the second coupling portion 370 may be further improved.

The second coupling portion 370 includes an accommodating portion 371 forming an accommodating groove 372 in which the insertion protrusion 351 is inserted. The accommodating groove 372 may extend along the longitudinal direction of the upper edge 33a to correspond to the insertion protrusion 351.

The accommodating portion 371 may include a first wall 373, a second wall 374, and a third wall 375. The first wall 373, the second wall 374, and the third wall 375 may form the accommodating groove 372. The first wall 373 may be opposite to the second wall 374. The third wall 375 may connect the first wall 373 to the second wall 374.

The first wall 373 may protrude from the step portion 385 toward the insulation 12. The first wall 373 may be perpendicular to the left plate body 33e.

The second coupling portion 370 includes a catching portion 77 for preventing the insertion protrusion 351 inserted in the accommodating groove 372 from departing from the accommodating groove 372.

The second coupling portion 370 may include an elastic bracket 76 in which the catching portion 77 is formed. The elastic bracket 76 may be formed by being bent from the third wall 375. A portion of the second wall 374 may be cut, and the elastic bracket 76 may be positioned at the cut portion of the second wall 374.

The elastic bracket 76 may be, in a process of inserting the insertion protrusion 351 into the accommodating groove 372, pressed by the catching hook 59 and elastically deformed to be open. After the insertion protrusion 51 is inserted in the accommodating groove 372, the elastic bracket 76 may return to an original state.

The insertion protrusion 351 may include a first surface 54 corresponding to the first wall 373, a second surface 55 corresponding to the second wall 374, and a third surface 56 corresponding to the third wall 375. After the insertion protrusion 351 is inserted in the accommodating groove 372, the first surface 54 may face an inner surface of the first wall 373, the second surface 55 may face an inner surface of the second wall 374, and the third surface 56 may face an inner surface 375a of the third wall 375.

The catching hook 59 may protrude from the second surface 55. The catching hook 59 may include an inclined surface 60 inclined to slide on the elastic bracket 76 while being in contact with the elastic bracket 76 upon inserting of the insertion protrusion 351 into the accommodating groove 372, and a catching surface 61 caught by the catching portion 77 after the insertion protrusion 51 is inserted in the accommodating groove 372.

The second coupling portion 370 includes an inner rib 80 protruding from the accommodating portion 371, wherein the inner rib 80 is inserted into the insertion protrusion 351 upon inserting of the insertion protrusion 351 into the accommodating groove 372. The inner rib 80 may protrude from the inner surface 375a of the third wall 375 toward the accommodating groove 372. The inner rib 80 may be spaced from the inner surface of the first wall 373 and the inner surface of the second wall 374.

The insertion protrusion 351 may include a rib groove 57 in which the inner rib 80 is inserted. The rib groove 57 may be formed by being depressed in the third surface 56 of the insertion protrusion 351.

The second coupling portion 370 may include an outer rib 382 provided on an outer side of the accommodating portion 371 and supporting the first wall 373. The outer rib 382 may connect an outer surface of the first wall 373 to the step portion 385. The outer rib 382 may be integrated into the left plate 33.

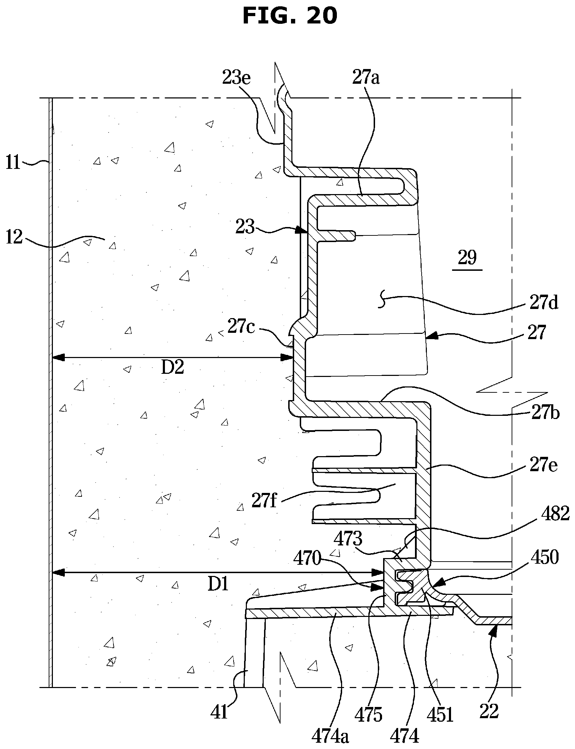

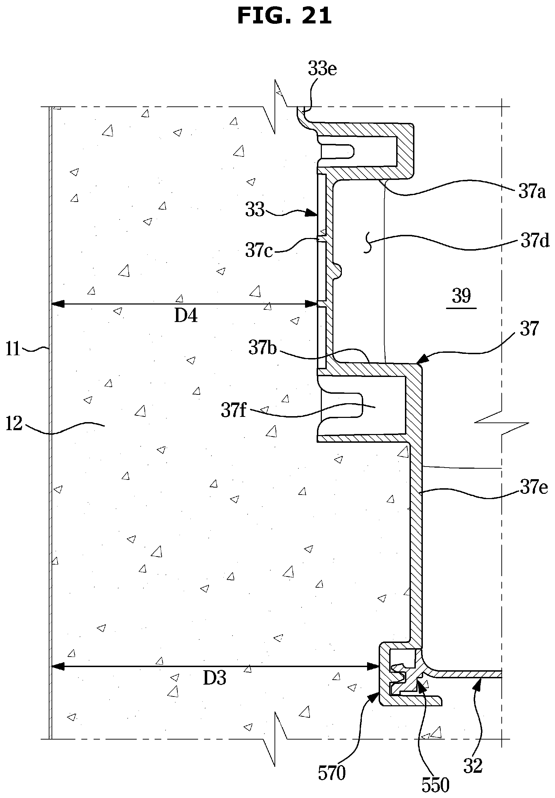

FIG. 19 is a front cross-sectional view showing an inner case and an outer case of a refrigerator according to an embodiment of the disclosure. FIG. 20 is an enlarged view showing a portion H of FIG. 19. FIG. 21 is an enlarged view showing a portion I of FIG. 19.

A relation between the rail 27 formed in the left plate 23 of the first inner case 20 and the coupling portions of the left plate 23 and the lower plate 22 of the first inner case 20 will be described with reference to FIGS. 19 and 20. Because the left plate 23 and the right plate 24 of the first inner case 20 are symmetrical to each other and are the substantially same, the following description may be applied in the same way to the rail 27 formed in the right plate 24 of the first inner case 20 and the coupling portions of the right plate 24 and the lower plate 22 of the first inner case 20.

As described above, the rail 27 (see FIGS. 3 and 20) slidably supporting the storage container 14 (see FIG. 1) may be formed on the left plate 23.

More specifically, the rail 27 may include an upper rail portion 27a protruding from an inner surface of a left plate body 23e, a lower rail portion 27b protruding from the inner surface of the left plate body 23e and positioned below the upper rail portion 27a, a rail side portion 27c connecting the upper rail portion 27a to the lower rail portion 27b, a rail groove 27d formed between the upper rail portion 27a and the lower rail portion 27b such that a container rail portion (not shown) of the storage container 14 is slidably inserted in the rail groove 27d, and a rail supporting portion 27e extending downward from the lower rail portion 27b.

A rail reinforcing rib 27f for reinforcing strength of the rail 27 may be formed on outer surfaces of the lower rail portion 27b and the rail supporting portion 27e.

To couple an edge of the lower plate 22 with an edge of the left plate 23, a first coupling portion 450 may be formed in the edge of the lower plate 22, and a second coupling portion 470 may be formed in the edge of the left plate 23.

The first coupling portion 450 may include an insertion protrusion 451. The second coupling portion 470 may include an accommodating portion forming an accommodating groove in which the insertion protrusion 451 is inserted.

The accommodating portion may include a first wall 473, a second wall 474, and a third wall 475. The first wall 473, the second wall 474, and the third wall 475 may form the accommodating groove. The first wall 473 may be opposite to the second wall 474. The third wall 475 may connect the first wall 473 to the second wall 474.

The second coupling portion 470 may include an outer rib 482 provided on an outer side of the accommodating portion 471 and supporting the first wall 473. The outer rib 482 may connect an outer surface of the first wall 473 to the rail supporting portion 27e of the rail 27. The outer rib 482 may be formed in a shape of a triangle.

The second wall 474 may include a second wall extension portion 474a protruding from an outer end of the second wall 474 toward the insulation 12. The second wall extension portion 474a may protrude more outward than the left plate body 23e. The extension panel 41 (see FIGS. 3 and 20) may extend downward from an end of the second wall extension portion 474a.

The second coupling portion 470 may be formed below the rail 27 of the left plate 23, while being adjacent to the rail 27. More specifically, the first wall 473 may extend from a lower end of the rail supporting portion 27e of the rail 27 toward the insulation 12.

Also, a length D1 between the outer case 11 and the coupling portions 450 and 470 may be longer than a length D2 between the outer case 11 and the rail 27. That is, the first and second coupling portions 450 and 470 may be positioned at an inner side than the rail side portion 27c.

Accordingly, a thickness of the insulation 12 between the outer case 11 and the first and second coupling portions 450 and 470 may be greater than a thickness of the insulation 12 between the outer case 11 and the rail side portion 27c.

As such, because the first and second coupling portions 450 and 470 do not protrude toward the insulation 12, the thickness of the insulation 12 may be not reduced by the first and second coupling portions 450 and 470, which secures a sufficient insulation thickness. Accordingly, it may be possible to prevent a dew formation defect or an increase of power consumption, which is caused by an insulation thickness reduction.

A rail 37 formed in the left plate 33 of the second inner case 30, and the coupling portions 550 and 570 formed in the left plate 33 and the lower plate 32 of the second inner case 30 will be described with reference to FIG. 21.

A relation between the rail 37 and the coupling portions 550 and 570 of the second inner case 30 may be the same as the relation between the rail 27 and the coupling portions 450 and 470 of the first inner case 20.

That is, the rail 37 (see FIGS. 15 and 21) slidably supporting the storage container 14 may be formed on an inner surface of the left plate 33, and the second coupling portion 570 may be formed below the rail 37 of the left plate 33, while being adjacent to the rail 37.

The rail 37 may include an upper rail portion 37a protruding from an inner surface of the left plate body 33e, a lower rail portion 37b protruding from the inner surface of the left plate body 33e and positioned below the upper rail portion 37a, a rail side portion 37c connecting the upper rail portion 37a to the lower rail portion 37b, a rail groove 37d formed between the upper rail portion 37a and the lower rail portion 37b such that a container rail portion (not shown) of the storage container 14 is slidably inserted in the rail groove 37d, and a rail supporting portion 37e extending downward from the lower rail portion 37b.

A rail reinforcing rib 37f for reinforcing strength of the rail 37 may be formed on outer surfaces of the lower rail portion 37b and the rail supporting portion 37e.

The second coupling portion 570 may extend from a lower end of the rail supporting portion 37e of the rail 37.

Also, a length D3 between the outer case 11 and the coupling portions 550 and 570 may be longer than a length D4 between the outer case 11 and the rail 37. That is, the coupling portions 550 and 570 may be positioned at an inner side than the rail side portion 37c.

Accordingly, a thickness of the insulation 12 between the outer case 11 and the coupling portions 550 and 570 may be greater than a thickness of the insulation 12 between the outer case 11 and the rail side portion 37c.

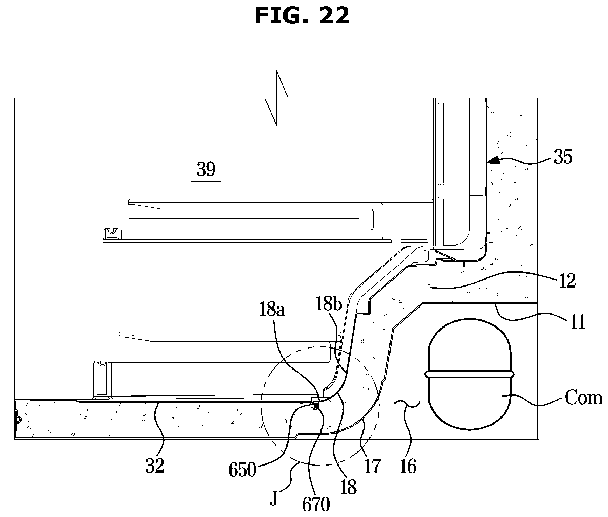

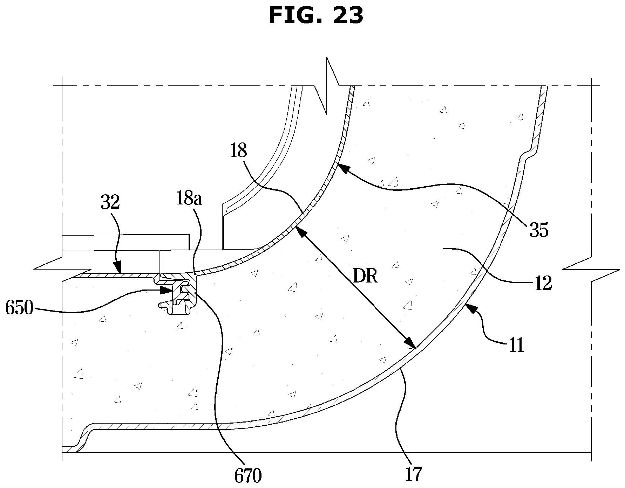

FIG. 22 is a side cross-sectional view showing an inner case and an outer case of a lower portion of a refrigerator according to an embodiment of the disclosure. FIG. 23 is an enlarged view showing a portion J of FIG. 22.

A structure of the coupling portions of the lower plate 32 and the rear plate 35 of the second inner case 30, according to an embodiment of the disclosure, will be described with reference to FIGS. 22 and 23.

A machine room 16 in which a compressor Com for compressing a refrigerant, etc. are accommodated may be formed in a rear, lower space of the main body 10. The machine room 16 may be insulated from the storage room 39 by the insulation 12.

The outer case 11 may include an outer case round portion 17 rounded convexly toward the machine room 16 in front of the machine room 16. Also, the inner case 30 may include an inner case round portion 18 rounded to correspond to the outer case round portion 17.

A thickness DR between the outer case round portion 17 and the inner case round portion 18 may be substantially constant between a start point 18a and an end point 18b of the inner case round portion 18.

Also, the coupling portions 650 and 670 of the lower plate 32 and the rear plate 35 may be positioned at the start point 187a of the inner case round portion 18. For this, the inner case round portion 18 may be formed in the rear plate 35. The inner case round portion 18 may extend in a rear upper direction from the coupling portion 670.

Because the coupling portions 650 and 670 of the lower plate 32 and the rear plate 35 are positioned at the start point 18a of the inner case round portion 18, a reduction in thickness of the insulation 12 between the outer case round portion 17 and the inner case round portion 18 may be small, and a dew formation defect or an increase of power consumption, which is caused by a reduction of an insulation thickness, may be prevented.

Also, because the inner case round portion 18 is positioned in the rear plate 35 and the lower plate 35 is flat, the coupling portion 670 formed in an edge of the rear plate 35 may be easily assembled with the coupling portion 650 formed in an edge of the lower plate 32. That is, by moving the coupling portion 650 of the lower plate 32 in a horizontal direction toward the coupling portion 670 of the rear plate 35, the coupling portion 650 of the lower plate 32 may be coupled with the coupling portion 670 of the rear plate 35.

Although the technical concept of the disclosure has been described based on specific embodiments, the scope of rights of the disclosure is not limited to these embodiments. It should be interpreted that various embodiments modified or changed by a person skilled in the art within a scope not deviating from the following claims, also belong to the scope of rights of the disclosure.

## Claims

1. A refrigerator comprising:
an inner case (20, 30) forming a storage room (29, 39) and including a plurality of plates, each of the plurality of plates formed by injection-molding;
an outer case (11) coupled with the inner case; and
an insulation (12) provided between the inner case and the outer case,
wherein a first plate (21, 31, 22, 32) of the plurality of plates comprises a first coupling portion (50, 250, 350, 450, 550, 650) formed along an edge of the first plate, the first coupling portion comprises an insertion protrusion (51, 351, 451), and
a second plate (24, 25, 33, 23, 35) of the plurality of plates comprises a second coupling portion (70, 270, 370, 470, 570, 670) formed along an edge of the second plate and couplable with the first coupling portion (50, 250, 350, 450, 550, 650);
wherein the second coupling portion comprises:
an accommodating portion (71, 271, 371, 471) formed to have an accommodating groove (72, 272, 372) into which the insertion protrusion is insertable,
a catching portion (77) configured to prevent the insertion protrusion from departing from the accommodating groove upon insertion of the insertion protrusion into the accommodating groove, and
an inner rib (80) formed to protrude from an inner surface of the accommodating portion toward the accommodating groove and insertable into the insertion protrusion;
wherein the insertion protrusion (51, 351, 451) is insertable into the accommodating groove (72, 272, 372) in a first direction; and
wherein the inner rib (80) is formed to protrude along a second direction that is opposite to the first direction and is insertable into the insertion protrusion in the second direction.

2. The refrigerator of claim 1, wherein the accommodating portion (71) comprises:
a first wall (73, 273, 373, 473);
a second wall (74, 274, 374, 474) opposite to the first wall; and
a third wall (75, 275, 375, 475) connecting the first wall to the second wall, and
the inner rib (80) is formed to protrude from the third wall.

3. The refrigerator of claim 2, wherein the first wall (73, 273) is formed to protrude from the second plate (24, 25) toward the insulation.

4. The refrigerator of claim 2, wherein the inner rib (80) is supported by the insertion protrusion (51, 351, 451) along a fourth direction that is opposite to a third direction upon thermal contraction of the second plate (24, 25, 33, 23, 35) along the third direction that is perpendicular to the first direction.

5. The refrigerator of claim 1, wherein the inner rib (80) is formed to extend along a longitudinal direction of the edge of the second plate (24, 25, 33, 23, 35).

6. The refrigerator of claim 2, wherein the insertion protrusion (51, 351, 451) comprises:
a first surface (54) corresponding to the first wall (73, 273, 373, 473);
a second surface (55) corresponding to the second wall (74, 274, 374, 474); and
a third surface (56) corresponding to the third wall (75, 275, 375, 475).

7. The refrigerator of claim 6, wherein the insertion protrusion (51, 351) comprises a catching hook (59) formed to protrude from the second surface (55) and configured to be caught by the catching portion (77).

8. The refrigerator of claim 6, wherein the insertion protrusion (51, 351) comprises a rib groove (57) into which the inner rib (80) is insertable, and
the rib groove is formed by being depressed into the third surface (56).

9. The refrigerator of claim 8, wherein the insertion protrusion (51) comprises a guide pin (58) formed in the rib groove (57) and configured to guide the insertion protrusion to be insertable into the accommodating groove (72), and
the inner rib (80) comprises a guide groove (81) into which the guide pin is insertable.

10. The refrigerator of claim 2, wherein the second coupling portion (70, 370, 470) comprises an outer rib (82, 382, 482) connecting an outer surface of the second plate (24, 33, 23) to an outer surface of the first wall (73, 373, 473) and supporting the first wall.

11. The refrigerator of claim 10, wherein the outer rib (82) comprises:
a first contact surface (83) in contact with the outer surface of the second plate (24);
a second contact surface (84) in contact with the outer surface of the first wall (73); and
an inclined surface (85) connecting the first contact surface to the second contact surface.

12. The refrigerator of claim 10, wherein a plurality of outer ribs (82) are provided, and
the plurality of outer ribs are spaced from each other along a longitudinal direction of the edge (24a) of the second plate (24).

13. The refrigerator of claim 2, wherein the first wall (73, 273) is formed to extend from the second plate (24, 25).

14. The refrigerator of claim 1, wherein the first coupling portion (350) further comprises an auxiliary protrusion (362) formed at an opposite side of the insertion protrusion (351), and
the second coupling portion (370) further comprises a step portion (385) stepped toward the insulation and in contact with the auxiliary protrusion.

15. The refrigerator of claim 1, wherein the second coupling portion (70, 270) comprises:
an elastic bracket (76) in which the catching portion (77) is formed, and
a plurality of slits (78) respectively formed on both sides of the elastic bracket to enable the elastic bracket to be elastically deformable;
wherein the elastic bracket is, upon inserting of the insertion protrusion (51) into the accommodating groove (72, 272), pressed by the catching hook (59) and elastically deformed; and
wherein the elastic bracket returns to an original state after the insertion protrusion is inserted in the accommodating groove.

## Patentansprüche

1. Kühlschrank, umfassend:
ein Innengehäuse (20, 30), das einen Lagerraum (29, 39) bildet und eine Vielzahl von Platten beinhaltet, wobei jede aus der Vielzahl von Platten durch Spritzgießen gebildet ist;
ein Außengehäuse (11), das mit dem Innengehäuse gekoppelt ist; und
eine Isolierung (12), die zwischen dem Innengehäuse und dem Außengehäuse bereitgestellt ist,
wobei eine erste Platte (21, 31, 22, 32) aus der Vielzahl von Platten einen ersten Kopplungsabschnitt (50, 250, 350, 450, 550, 650) umfasst, der entlang einer Kante der ersten Platte gebildet ist, wobei der erste Kopplungsabschnitt einen Einführvorsprung (51, 351, 451) umfasst, und
eine zweite Platte (24, 25, 33, 23, 35) aus der Vielzahl von Platten einen zweiten Kopplungsabschnitt (70, 270, 370, 470, 570, 670) umfasst, der entlang einer Kante der zweiten Platte gebildet und mit dem ersten Kopplungsabschnitt (50, 250, 350, 450, 550, 650) koppelbar ist;
wobei der zweite Kopplungsabschnitt Folgendes umfasst:
einen Aufnahmeabschnitt (71, 271, 371, 471), der gebildet ist, um eine Aufnahmenut (72, 272, 372) aufzuweisen, in die der Einführvorsprung einführbar ist,
einen Fangabschnitt (77), der dazu konfiguriert ist, zu verhindern, dass der Einführvorsprung bei Einführung des Einführvorsprungs in die Aufnahmenut aus der Aufnahmenut austritt, und
eine Innenrippe (80), die dazu gebildet ist, von einer Innenfläche des Aufnahmeabschnittes zu der Aufnahmenut vorzustehen, und in den Einführvorsprung einführbar ist;
wobei der Einführvorsprung (51, 351, 451) in die Aufnahmenut (72, 272, 372) in einer ersten Richtung einführbar ist; und
wobei die Innenrippe (80) dazu gebildet ist, entlang einer zweiten Richtung vorzustehen, die entgegengesetzt zu der ersten Richtung ist, und in den Einführvorsprung in der zweiten Richtung einführbar ist.

2. Kühlschrank nach Anspruch 1, wobei der Aufnahmeabschnitt (71) Folgendes umfasst:
eine erste Wand (73, 273, 373, 473);
eine zweite Wand (74, 274, 374, 474) gegenüber der ersten Wand; und
eine dritte Wand (75, 275, 375, 475), welche die erste Wand mit der zweiten Wand verbindet, und
wobei die Innenrippe (80) dazu gebildet ist, von der dritten Wand vorzustehen.

3. Kühlschrank nach Anspruch 2, wobei die erste Wand (73, 273) dazu gebildet ist, von der zweiten Platte (24, 25) zu der Isolierung vorzustehen.

4. Kühlschrank nach Anspruch 2, wobei die Innenrippe (80) durch den Einführvorsprung (51, 351, 451) entlang einer vierten Richtung, die entgegengesetzt zu einer dritten Richtung ist, bei thermischer Kontraktion der zweiten Platte (24, 25, 33, 23, 35) entlang der dritten Richtung, die senkrecht zu der ersten Richtung ist, gestützt wird.

5. Kühlschrank nach Anspruch 1, wobei die Innenrippe (80) dazu gebildet ist, sich entlang einer Längsrichtung der Kante der zweiten Platte (24, 25, 33, 23, 35) zu erstrecken.

6. Kühlschrank nach Anspruch 2, wobei der Einführvorsprung (51, 351, 451) Folgendes umfasst:
eine erste Fläche (54) entsprechend der ersten Wand (73, 273, 373, 473);
eine zweite Fläche (55) entsprechend der zweiten Wand (74, 274, 374, 474); und
eine dritte Fläche (56) entsprechend der dritten Wand (75, 275, 375, 475).

7. Kühlschrank nach Anspruch 6, wobei der Einführvorsprung (51, 351) einen Fanghaken (59) umfasst, der dazu gebildet ist, von der zweiten Fläche (55) vorzustehen, und dazu konfiguriert ist, durch den Fangabschnitt (77) gefangen zu werden.

8. Kühlschrank nach Anspruch 6, wobei der Einführvorsprung (51, 351) eine Rippennut (57) umfasst, in welche die Innenrippe (80) einführbar ist, und
die Rippennut gebildet wird, indem sie in die dritte Fläche (56) gedrückt wird.

9. Kühlschrank nach Anspruch 8, wobei der Einführvorsprung (51) einen Führungsstift (58) umfasst, der in der Rippennut (57) gebildet und dazu konfiguriert ist, den Einführvorsprung zu führen, sodass er in die Aufnahmenut (72) einführbar ist, und
die Innenrippe (80) eine Führungsnut (81) umfasst, in die der Führungsstift einführbar ist.

10. Kühlschrank nach Anspruch 2, wobei der zweite Kopplungsabschnitt (70, 370, 470) eine Außenrippe (82, 382, 482) umfasst, die eine Außenfläche der zweiten Platte (24, 33, 23) mit einer Außenfläche der ersten Wand (73, 373, 473) verbindet und die erste Wand stützt.

11. Kühlschrank nach Anspruch 10, wobei die Außenrippe (82) Folgendes umfasst:
eine erste Kontaktfläche (83) in Kontakt mit der Außenfläche der zweiten Platte (24);
eine zweite Kontaktfläche (84) in Kontakt mit der Außenfläche der ersten Wand (73); und
eine geneigte Fläche (85), welche die erste Kontaktfläche mit der zweiten Kontaktfläche verbindet.

12. Kühlschrank nach Anspruch 10, wobei eine Vielzahl von Außenrippen (82) bereitgestellt ist, und
die Vielzahl von Außenrippen entlang einer Längsrichtung der Kante (24a) der zweiten Platte (24) voneinander beabstandet ist.

13. Kühlschrank nach Anspruch 2, wobei die erste Wand (73, 273) dazu gebildet ist, sich von der zweiten Platte (24, 25) zu erstrecken.

14. Kühlschrank nach Anspruch 1, wobei der erste Kopplungsabschnitt (350) ferner einen Hilfsvorsprung (362) umfasst, der an einer gegenüberliegenden Seite des Einführvorsprungs (351) gebildet ist, und
der zweite Kopplungsabschnitt (370) ferner einen Stufenabschnitt (385) umfasst, der zu der Isolierung gestuft und in Kontakt mit dem Hilfsvorsprung ist.

15. Kühlschrank nach Anspruch 1, wobei der zweite Kopplungsabschnitt (70, 270) Folgendes umfasst:
eine elastische Halterung (76), in welcher der Fangabschnitt (77) gebildet ist, und
eine Vielzahl von Schlitzen (78), die jeweils auf beiden Seiten der elastischen Halterung gebildet sind, um zu ermöglichen, dass die elastische Halterung elastisch verformbar ist;
wobei die elastische Halterung beim Einführen des Einführvorsprungs (51) in die Aufnahmenut (72, 272) durch den Fanghaken (59) gedrückt und elastisch verformt wird; und
wobei die elastische Halterung in einen ursprünglichen Zustand zurückkehrt, nachdem der Einführvorsprung in die Aufnahmenut eingeführt ist.

## Revendications

1. Réfrigérateur comprenant :
un boîtier interne (20, 30) formant une chambre de stockage (29, 39) et comprenant une pluralité de plaques, chacune de la pluralité de plaques étant formée par moulage par injection ;
un boîtier externe (11) couplé au boîtier interne ; et
une isolation (12) prévue entre le boîtier interne et le boîtier externe,
une première plaque (21, 31, 22, 32) de la pluralité de plaques comprenant une première partie de couplage (50, 250, 350, 450, 550, 650) formée le long d'un bord de la première plaque, ladite première partie de couplage comprenant une saillie d'insertion (51, 351, 451), et
une seconde plaque (24, 25, 33, 23, 35) de la pluralité de plaques comprenant une seconde partie de couplage (70, 270, 370, 470, 570, 670) formée le long d'un bord de la seconde plaque et pouvant être couplée à la première partie de couplage (50, 250, 350, 450, 550, 650) ;
ladite seconde partie de couplage comprenant :
une partie de réception (71, 271, 371, 471) formée pour comporter une rainure de réception (72, 272, 372) dans laquelle la saillie d'insertion peut être insérée,
une partie d'accrochage (77) conçue pour empêcher la saillie d'insertion de s'écarter de la rainure de réception lors de l'insertion de la saillie d'insertion dans la rainure de réception, et
une nervure interne (80) formée pour faire saillie à partir d'une surface interne de la partie de réception vers la rainure de réception et pouvant être insérée dans la saillie d'insertion ;
ladite saillie d'insertion (51, 351, 451) pouvant être insérée dans la rainure de réception (72, 272, 372) dans une première direction ; et
ladite nervure interne (80) étant formée pour faire saillie le long d'une deuxième direction qui est opposée à la première direction et pouvant être insérée dans la saillie d'insertion dans la deuxième direction.

2. Réfrigérateur de la revendication 1, ladite partie de réception (71) comprenant :
une première paroi (73, 273, 373, 473) ;
une deuxième paroi (74, 274, 374, 474) opposée à la première paroi ; et
une troisième paroi (75, 275, 375, 475) reliant la première paroi à la seconde paroi, et
ladite nervure interne (80) étant formée pour faire saillie à partir de la troisième paroi.

3. Réfrigérateur de la revendication 2, ladite première paroi (73, 273) étant formée pour faire saillie à partir de la seconde plaque (24, 25) vers l'isolation.

4. Réfrigérateur de la revendication 2, ladite nervure interne (80) étant supportée par la saillie d'insertion (51, 351, 451) le long d'une quatrième direction qui est opposée à une troisième direction lors de la contraction thermique de la seconde plaque (24, 25, 33, 23, 35) le long de la troisième direction qui est perpendiculaire à la première direction.

5. Réfrigérateur de la revendication 1, ladite nervure interne (80) étant formée pour s'étendre le long d'une direction longitudinale du bord de la seconde plaque (24, 25, 33, 23, 35).

6. Réfrigérateur de la revendication 2, ladite saillie d'insertion (51, 351, 451) comprenant :
une première surface (54) correspondant à la première paroi (73, 273, 373, 473) ;
une deuxième surface (55) correspondant à la deuxième paroi (74, 274, 374, 474) ; et
une troisième surface (56) correspondant à la troisième paroi (75, 275, 375, 475).

7. Réfrigérateur de la revendication 6, ladite saillie d'insertion (51, 351) comprenant un crochet d'accrochage (59) formé pour faire saillie à partir de la deuxième surface (55) et conçu pour être accroché par la partie d'accrochage (77).

8. Réfrigérateur de la revendication 6, ladite saillie d'insertion (51, 351) comprenant une rainure (57) de nervure dans laquelle la nervure interne (80) peut être insérée, et
ladite rainure de nervure étant formée en étant enfoncée dans ladite troisième surface (56).

9. Réfrigérateur de la revendication 8, ladite saillie d'insertion (51) comprenant une broche de guidage (58) formée dans la rainure (57) de nervure et conçue pour guider la saillie d'insertion afin qu'elle puisse être insérée dans la rainure (72) de réception, et
ladite nervure interne (80) comprenant une rainure de guidage (81) dans laquelle la broche de guidage peut être insérée.

10. Réfrigérateur de la revendication 2, ladite seconde partie de couplage (70, 370, 470) comprenant une nervure externe (82, 382, 482) reliant une surface externe de la seconde plaque (24, 33, 23) à une surface externe de la première paroi (73, 373, 473) et supportant la première paroi.

11. Réfrigérateur de la revendication 10, ladite nervure externe (82) comprenant :
une première surface de contact (83) en contact avec la surface externe de la seconde plaque (24) ;
une seconde surface de contact (84) en contact avec la surface externe de la première paroi (73) ; et
une surface inclinée (85) reliant la première surface de contact à la seconde surface de contact.

12. Réfrigérateur de la revendication 10, une pluralité de nervures externes (82) étant prévues, et
ladite pluralité de nervures externes étant espacées les unes des autres le long d'une direction longitudinale du bord (24a) de la seconde plaque (24).

13. Réfrigérateur de la revendication 2, ladite première paroi (73, 273) étant formée pour s'étendre à partir de la seconde plaque (24, 25).

14. Réfrigérateur de la revendication 1, ladite première partie de couplage (350) comprenant en outre une saillie auxiliaire (362) formée sur un côté opposé de la saillie d'insertion (351), et ladite seconde partie de couplage (370) comprenant en outre une partie en gradin (385) étagée vers l'isolation et en contact avec la saillie auxiliaire.

15. Réfrigérateur de la revendication 1, ladite seconde partie de couplage (70, 270) comprenant :
un support élastique (76) dans lequel la partie d'accrochage (77) est formée, et
une pluralité de fentes (78) respectivement formées sur les deux côtés du support élastique pour permettre au support élastique d'être élastiquement déformable ;
ledit support élastique étant, lors de l'insertion de la saillie d'insertion (51) dans la rainure de réception (72, 272), pressée par le crochet d'accrochage (59) et déformée élastiquement ; et
ledit support élastique revenant à un état d'origine après que la saillie d'insertion est insérée dans la rainure de réception.
